# EUROPEAN PATENT APPLICATION

(11) **EP 4 790 454 A1**
(43) Date of publication of application: **12.08.2026**
(21) Application number: 26152688.3
(22) Date of filing: 19.01.2026
(51) Int. Cl.: G01S 7/497, G01S 7/481, G02B 27/00, G01S 17/58, G01S 17/95

(54) **OPTICAL AIR-DATA SENSOR WINDOW CLEANING SYSTEM**

(30) Priority: 11.02.2025 US 202519050653
(71) Applicant: Honeywell International Inc., Charlotte, NC 28202 (US)
(72) Inventor: DOBBINS, Thomas, Charlotte, 28202 (US); DRASAL, Zbynek, Charlotte, 28202 (US)
(74) Representative: Haseltine Lake Kempner LLP

(57) **Abstract**

An optical air-data sensor window cleaning system is provided. At least one cleaning supply nozzle is configured to direct a cleaning solution on an outside surface of a window of the optical head of an optical air data sensor. At least one fluid pump is in fluid communication with the at least one cleaning supply nozzle. At least one drying nozzle is configured to direct an air flow on the outside surface of the window to the optical head of the optical air data sensor. At least one pneumatic pump in pneumatic communication with the at least one drying nozzle. A monitoring system is configured to sense the condition of the window. At least one controller is configured to control operations of the at least one fluid pump and the at least one pneumatic pump based on an output of the monitoring system.

## Description

### BACKGROUND

Avionic vehicles, such as fixed-wing aircraft, rotor-craft etc., may use flight control avionics that rely on sensor data. An example of a sensor that provides needed data is a traditional pitot-static system that includes pneumatic sensors. Such data, denoted as air-data, is used by the flight control avionics to evaluate aircraft-to-airstream flight conditions/status that are critical for flight-control and situational awareness. Air-data may include true/computed/indicated airspeed (TAS/CAS/IAS), angle-of-attack/side-slip (AoA/AoS), static/total air temperature (SAT/TAT), pressure altitude (H) and Mach number (M).

The traditional approach of using pitot-probes, however, suffer from characteristic failure modes, which historically has led to several serious flight accidents. Further, the use of pitot probes to gather air-data has limitations. The limitations may arise from a sensitivity to aircraft aerodynamic boundary layer effects, a sensitivity of engine thrust effects as well as a sensitivity to direct sun exposure. These sensitivity limitations may lead to a systematic bias in air-data evaluation that will need to be corrected by calibration. Other limitations of pitot probes used to gather air-data includes a lower accuracy at low-speed that may affect continuity and availability of air-data. Further, ice formation in-flight/on-ground and accidental mechanical on-ground covering of pitot probes may result with a blocking effect of pitot-static sensors leading to a potential risk of in-flight failure.

The limitations of pitot probes may be significantly mitigated by integrating dissimilar technology to determine air-data in an aircraft. One type of dissimilar technology being developed to gather air-data is an optical air-data system. An optical air-data system generally includes a laser to generate light beams that are transmitted through a window of an aircraft into the atmosphere around the aircraft by a transmitter in an optical head. The light beams scatter off particles in the atmosphere. Some of the scattered light beams are received at a receiver in the optical head. A detector in the optical head detects the received light beams. The received light beams are compared to the transmitted light beams in determining air-data that can be used by the aircraft. Any developed optical air-data system needs to be robust and accurate with a stable laser source for the system to become certified for use in an aircraft.

For the reasons stated above and for other reasons stated below which will become apparent to those skilled in the art upon reading and understanding the present specification, there is a need in the art for an optical air-data window cleaning system.

### SUMMARY

The following summary is made by way of example and not by way of limitation. It is merely provided to aid the reader in understanding some of the aspects of the subject matter described. Embodiments provide an optical air-data window cleaning system.

In one embodiment, an optical air-data window cleaning system is provided. The cleaning system includes at least one cleaning supply nozzle, at least one fluid pump, at least one drying nozzle, at least one pneumatic pump, monitoring system at least one controller. The at least one cleaning supply nozzle is configured to direct a cleaning solution on an outside surface of a window to an optical head of an optical air data system. The at least one fluid pump is in fluid communication with the at least one cleaning supply nozzle. The at least one drying nozzle is configured to direct an air flow on the outside surface of the window to the optical head of the optical air data system. The at least one pneumatic pump in pneumatic communication with the at least one drying nozzle. The monitoring system is configured to sense a condition of the window. The at least one controller configured to control operations of the at least one fluid pump and the at least one pneumatic pump based on an output of the monitoring system.

In another embodiment, another optical air-data window cleaning system is provided. The cleaning system includes at least one cleaning supply nozzle, at least one fluid pump, at least one drying nozzle, at least one pneumatic pump, a monitoring system, a cover, an actuator and at least one controller. The at least one cleaning supply nozzle is configured to direct a cleaning solution on an outside surface of a window to an optical head of an optical air data system. The at least one fluid pump is in fluid communication with the at least one cleaning supply nozzle. The at least one drying nozzle is configured to direct an air flow on the outside surface of the window of the optical head of the optical air data system. The at least one pneumatic pump is in pneumatic communication with the at least one drying nozzle. The monitoring system is configured to sense the condition of the window. The monitoring system includes a light emitting diode and at least one sensor. The light emitting source is configured to emit light through the window. The at least one sensor is configured to detect an illumination power of the emitted light through the window. The at least one controller is configured to determine the condition of the window based on the detected emitted light through the window. The cover is configured to selectively cover the window to the optical head of the optical air-data system. The actuator is configured to move the cover to selectively cover and uncover the window. The at least one controller is further configured to control operations of the at least one fluid pump and the at least one pneumatic pump based on an output of the monitoring system. The at least one controller is configured to control the actuator to selectively position the cover to cover the window when sensing the condition of the window. The at least one controller is further still configured to control the actuator to selectively position the cover to cover the window when the window is being cleaned.

In yet another embodiment, A method of cleaning a window to an optical head of an optical air-data system is provided. The method includes closing a cover to the window; energizing a light emitting source to generate emitted light through the window; sensing an illumination strength of the emitted light that passed through the window; determining if the illumination strength indicates if the window should be cleaned; and cleaning the window with the cover covering the window when it is determined that the illumination strength indicates the window should be cleaned.

### BRIEF DESCRIPTION OF THE DRAWINGS

The present invention can be more easily understood and further advantages and uses thereof will be more readily apparent, when considered in view of the detailed description and the following figures in which:
Figure 1A is a block diagram of a window cover cleaning system for an optical air-data system with the cover in an open position according to an example aspect of the present invention;
Figure 1B is a block diagram of the window cover cleaning system of Figure 1A with the cover moving into a closed position;
Figure 1C is a block diagram of the window cover cleaning system of Figure 1A with the cover in a closed position;
Figure 2A illustrates a block diagram of a window cover cleaning system for an optical air-data system during the distribution of cleaning solution on an outside surface of the window according to an example aspect of the present invention;
Figure 2B illustrates a block diagram of the window cover cleaning system of Figure 2A during a distribution of a flow of air to dry the outside surface of the window according to an example aspect of the present invention;
Figure 3A illustrates a block diagram of a window cover cleaning system for an optical air-data system during the distribution of cleaning solution on an outside surface of the window according to an example aspect of the present invention;
Figure 3B illustrates a block diagram of the window cover cleaning system of Figure 3A during a distribution of a flow of air to dry the outside surface of the window according to an example aspect of the present invention;
Figure 4 illustrates a block diagram of a window cover cleaning system with a monitoring system according to an example aspect of the present invention;
Figure 5 illustrates a calibration flow diagram for the monitoring system according to an example aspect of the present invention; and
Figure 6 illustrates a window condition monitoring system according to an example aspect of the present application.

In accordance with common practice, the various described features are not drawn to scale but are drawn to emphasize specific features relevant to the present invention. Reference characters denote like elements throughout Figures and text.

### DETAILED DESCRIPTION

In the following detailed description, reference is made to the accompanying drawings, which form a part hereof, and in which is shown by way of illustration specific embodiments in which the inventions may be practiced. These embodiments are described in sufficient detail to enable those skilled in the art to practice the invention, and it is to be understood that other embodiments may be utilized and that changes may be made without departing from the spirit and scope of the present invention. The following detailed description is, therefore, not to be taken in a limiting sense, and the scope of the present invention is defined only by the claims and equivalents thereof.

Embodiments of the present invention provide an optical air-data window cleaning system. In one example, it is determined if a window to an optical head needs to be cleaned and if a cleaning is needed, the optical air-data window cleaning system is activated to clean the outside surface of the window.

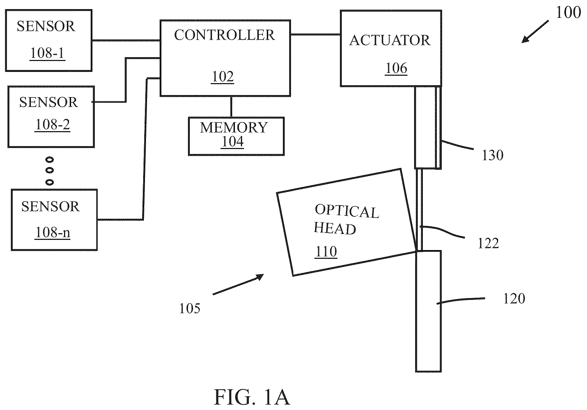

Figure 1A illustrates a block diagram of an optical head cover system 100 for an optical air-data system 105. The optical head cover system 100 for an optical air-data system 105 in this example, includes a controller 102, memory 104, an actuator 106, a cover 130 and a plurality of sensors 108-1, 108-2 through 108-n.

In general, the controller 102 (which may be referred to as a cover controller) may include any one or more of a processor, microprocessor, a digital signal processor (DSP), an application specific integrated circuit (ASIC), a field program gate array (FPGA), or equivalent discrete or integrated logic circuitry. In some example embodiments, controller 102 may include multiple components, such as any combination of one or more microprocessors, one or more controllers, one or more DSPs, one or more ASICs, one or more FPGAs, as well as other discrete or integrated logic circuitry. The functions attributed to the controller 102 herein may be embodied as software, firmware, hardware or any combination thereof. The controller 102 may be part of a system controller or a component controller. The memory 104 may include computer-readable operating instructions that, when executed by the controller, provides functions of the optical head cover system 100 for the optical air-data system 105. Such functions may include the functions of controlling the opening and closing of cover 130 described below. The computer readable instructions may be encoded within memory 104. Memory 104 may be an appropriate non-transitory storage medium or media including any volatile, nonvolatile, magnetic, optical, or electrical media, such as, but not limited to, a random access memory (RAM), read-only memory (ROM), nonvolatile RAM (NVRAM), electrically-erasable programmable ROM (EEPROM), flash memory, or any other storage medium.

The actuator 106 selectively moves the cover 130 to selectively cover and uncover the window 122 to the optical head 110. In one example, the actuator 106 is controlled by the controller 102. The controller 102, based on the operating instructions stored in memory 104 and sensor information from sensors 108-1 through 108-n, directs the actuator 106 to position the cover 130 in a desired location relative to the window 122 to selectively cover or expose the window 122 to the optical head 110.

The plurality of sensors 108-1 through 108-n, which may be generally identified by sensor 108, may include for example, a weight-on-wheel (WOW) sensor, speed sensor, altitude sensor, location sensor, a switch, etc. Sensor 108 senses an aspect associated with a vehicle. A sensor output may provide sensor information on an event the controller 102 is monitoring for in controlling the actuator 106. For example, a WOW may provide an indication, or event, to the controller 102 that an aircraft is on the ground. It may be desired to have the cover 130 cover the window 122 when the aircraft is on the ground to prevent debris from gathering on the window or to protect the window 122 from other factors when the aircraft is on the ground.

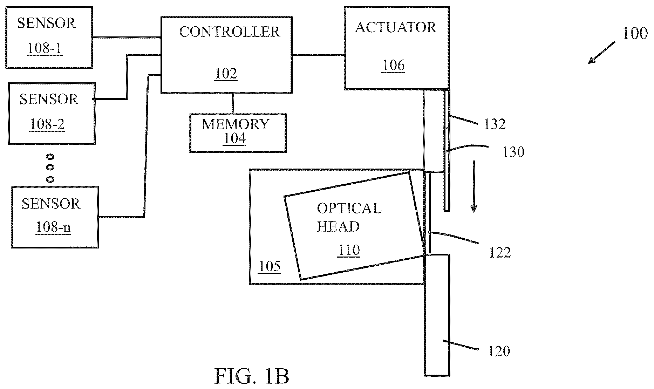

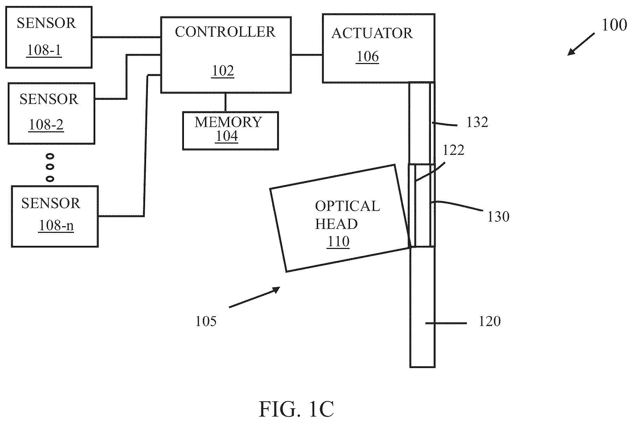

In the example illustrated in Figure 1A, the cover 130 is illustrated as being retained within an outer surface 120 (shell) of an aircraft. In Figure 1A, the cover 130 is positioned away from the window 122 (opened position). Figure 1B illustrates the cover 130 being moved by an actuator member 132 of the actuator 106 to cover the window 122. This may occur in response to an event provided by a sensor 108. Figure 1C illustrates the cover 130 being positioned to cover the window 122 (closed position).

One event that may be used to cover the window 122 with the cover is a cleaning event. Another event that may be used to cover the window is when an aircraft that includes the optical head 110 is on the ground.

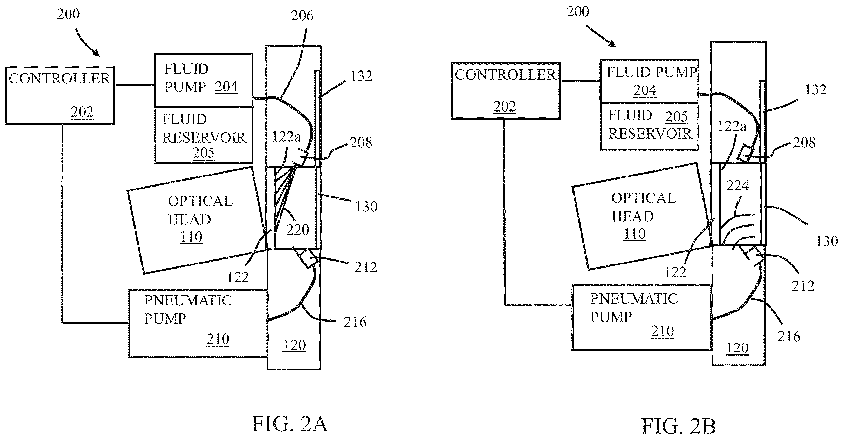

An optical air-data window cleaning system 200 to an optical head of an optical air-data system is illustrated in Figure 2A and Figure 2B. The optical air-data window cleaning system 200 for the window 122 of the optical head 110 of an optical air-data system 105 includes controller 202. This controller 202 may be referred to as a cleaning controller. Controller 202 (cleaning controller) in one example, is in communication with controller 102 (cover controller). In another example, controller 202 and controller 102 are combined (the same controller). Controller 202, in an example, is in communication with the memory 104. Memory 104 may include instructions regarding the operations of the cover and cleaning operations that are implemented by controller 202.

Optical air-data window cleaning system 200 for optical head 110 of optical air-data system 105 includes a fluid pump 204 that is in fluid communication with a fluid reservoir 205 that is designed to hold cleaning solution 220. The cleaning solution 220 may include chemicals to aid in the breakdown and removal of debris on the outside surface 122a of the window 122 or may just include water in another example. The fluid pump 204, under control of the cleaning controller 202 pumps the cleaning solution 220 out of the fluid reservoir 205 to at least one fluid nozzle 208 via cleaning solution passage lines 206. Each fluid nozzle 208 is positioned to direct a flow of cleaning solution onto the outside surface 122a of window 122 to remove any debris on the surface of window 122 once the cover 130 is positioned to cover the window 122. The optical air-data window cleaning system 200, in an example, includes a pneumatic pump 210. The pneumatic pump 210 is in fluid communication with at least one pneumatic nozzle 212 via at least one pneumatic passage line 216. Each pneumatic nozzle 212 is positioned to direct a flow of air 224 on the surface of the window 122 to dry off the window 122 after the window 122 is cleaned by the cleaning solution. Each fluid nozzle 208 and pneumatic nozzle 212 are positioned between the cover 130 and the outside surface 122a of window 122. Each fluid nozzle 208 and pneumatic nozzle 212 may be positioned in different locations in relation to each other between the cover 130 and the outside surface of window 122. For example, each fluid nozzle 208 may be opposably positioned across from window 122. In yet another example, a fluid nozzle 208 is positioned near an associated pneumatic nozzle 212. Further, in an example, the pneumatic pump 210 may be used to remove air, debris and fluid from around the outside of the window (i.e., is used as a vacuum). Further, in an example, a heating system may be used to heat up the air flow used to dry off the outside surface of the window 122. In the examples illustrated in Figures 2A and 2B, the fluid reservoir 205, fluid pump 204 and pneumatic pump 210 are housed within a vehicle that includes the optical air-data system 105.

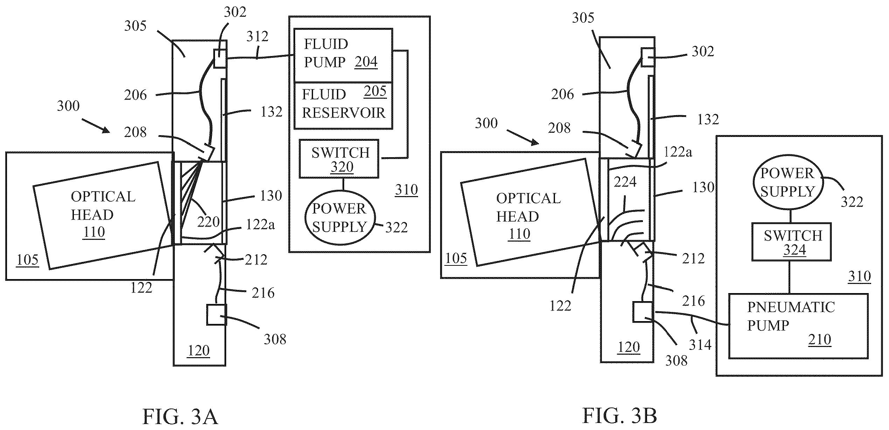

Another example of an optical air-data window cleaning system 300 to an optical head of an optical air-data system 105 is illustrated in Figure 3A and 3B. In this example, an external fluid input port 302 and an external pneumatic input port 308 are used to provide a cleaning solution and an air flow to the window outside surface 122a during cleaning. In this example, fluid pump 204, fluid reservoir 205, and pneumatic pump 210 are located remote from the vehicle 305 (an aircraft in an example) in a portable cleaning cart 310. The cleaning cart 310 may be moved to the aircraft during servicing. In this example, a fluid port 302 on the aircraft is selectively coupled to an external fluid passage line 312 that is coupled to the fluid pump 204 in the cleaning cart 310. Further, a pneumatic port 308 on the aircraft is selectively coupled to an external pneumatic passage line 314 that is coupled to the pneumatic pump 210 in the cleaning cart 310.

In Figure 3A, the fluid pump 204 that is coupled to the fluid input port 302, when activated, supplies cleaning solution to the fluid nozzle 208 to spray the cleaning solution on the outside surface 122a of the window 122 to remove dirt and debris from the window 122. In an example, the fluid pump 204 is activated by a switch 320 to selectively provide power from power supply 322 that is externally located from the aircraft. In Figure 3B, the pneumatic pump 210 that is coupled to the pneumatic port 308, when activated, supplies an air flow to the pneumatic nozzle 212 to dry the window 122. In the example of Figure 3B, the pneumatic pump 210 is activated by switch 324 to selectively provide power from power supply 322. Hence, in this example, the fluid pump 204 and the pneumatic pump 210 of the optical air-data window cleaning system 300 are located remote from an aircraft. This also allows for the use of an external power supply 322, external fluid pump 204, and external pneumatic pump 210.

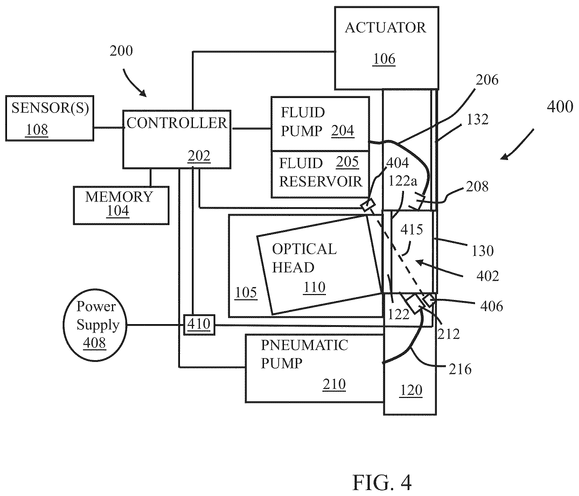

Figure 4 illustrates an optical air-data window cleaning system 400 that includes a monitoring system 402. The monitoring system 402 in this example includes at least one light emitting source 406 and at least one sensor 404. In one example, the at least one sensor 404 measures the brightness of detected light. One example of a sensor 404 that can measure an illumination strength of emitted light is a photodiode. In one example, the controller 202 is in communication with the at least one sensor 404 to receive sensor signals from the at least one sensor 404. The sensor signals in an example include illumination, or light intensity signals. Controller 202, in an example, is further in communication with a switch 410. Controller 202 is configured to control switch 410 to selectively couple a power supply 408 to selectively energize light emitting source 406. In embodiments, controller 202, based on operating instructions stored in memory 104 or by direction of an operator, powers or energizes the at least one emitting source 406 to generate a light signal of a select wavelength. In one embodiment, the at least one emitting source 406 transmits the emitted light in the visual spectrum. In other embodiments the emitted light is outside the visual spectrum. The at least one sensor 404 is configured to measure the intensity of the emitted light at the select wavelength.

In the example of Figure 4, the at least one light emitting source 406 is positioned between the cover 130 and the window 122 and the at least one sensor 404 is positioned behind the window 122. In one example the light emitting source 406 may be located on a backside of the cover 130. In another example, the at least one light emitting source 406 is positioned in back of the window 122 while the at least one sensor 404 is positioned on the other side of the window 122. In each example, the emitted light is directed to pass through the window 122 and read by the at least one sensor 404. In one example, the cover 130 is placed in the closed position before the monitoring system 402 is activated. Further in an embodiment, the at least one light emitting source 406 is a light emitting diode.

As discussed above, the at least one sensor 404 is configured to detect the intensity of the light emitted through the window 122. In one example, the cleaning controller 202, calibrates the monitoring system 402 when the window 122 is clean. The intensity of the light as detected by the at least one sensor 404, is stored in memory 104 in an example. If outside surface 122a of window 122 becomes dirty, (i.e., debris forms on the outside surface 122a of the window 122) at least some of the emitted light 415 will be blocked from passing through the window 122 and hence the intensity of the light will be less than what would be detected if window 122 was clean. The detection of the light intensity is compared to the intensity of the emitted light 415 with a clean window to determine if window 122 needs to be cleaned.

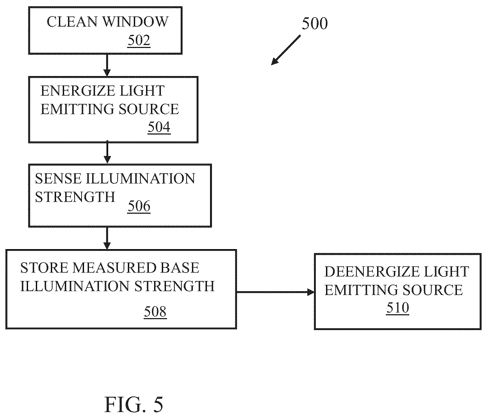

A method of calibrating the monitoring system 402, in an example, is shown in a calibration flow diagram 500 of Figure 5. The calibration flow diagram 500 of Figure 5 is provided as a series of sequential blocks. In one example, controller 202 implementing the operating instructions stored in memory 104 enables, at least in part, the operations described in the blocks of the calibration flow diagram 500 of Figure 5. The sequence of blocks may occur in a different order or even in parallel in other embodiments. Hence, the present invention is not limited to the sequential sequence of blocks set out in Figure 5.

The process starts at block 502 with a clean window 122. In one example, the cover 130 is closed when the window is cleaned. With a clean window 122, the light emitting source 406 is energized to generate emitted light 415 that passes through the window. This occurs at block 504. In one example, controller 202 controls switch 410 to selectively couple power from the power supply 408 to energize the light emitting source 406.

At block 506, the illumination strength of the emitted light that passes through the window 122 is sensed. In one example, the emitted light is sensed with sensor 404. Further, in one example, the cover 130 remains closed during the calibration process to prevent outside light from passing through the window 122 and affecting the sensed illumination strength. At block 508, the cleaning controller 202, that is in communication with the sensor 404, stores the sensed illumination strength as a base illumination strength in the memory 104. The calibration process concludes at block 510 by deenergizing the light emitting source 406.

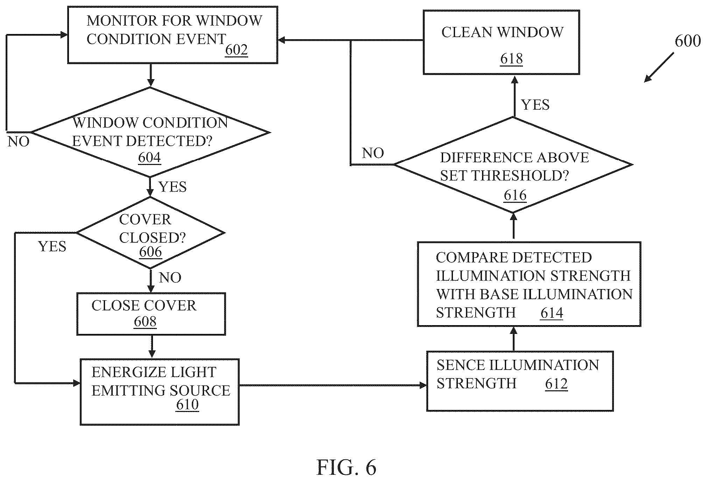

Once calibrated the monitoring system 402 may be employed. An example of a method of operating the monitoring system 402, is shown in a window condition monitoring system flow diagram 600 of Figure 6. The window condition monitoring system flow diagram 600 of Figure 6 is provided as a series of sequential blocks. In one example, cover controller 102 implementing the operating instructions stored in the memory 104 enables, at least in part, the operations described in the blocks of the window condition monitoring system flow diagram 600 of Figure 6. The sequence of blocks may occur in a different order or even in parallel in other embodiments. Hence, the present invention is not limited to the sequential sequence of blocks set out in Figure 6.

At block 602, a window condition event is monitored. Examples of events that indicate the condition or state of the window 122 should be monitored (checked), may include when the vehicle, such as an aircraft, is on the ground after the completion of a flight, after a period of time the cover 130 has been in an opened position, after a vehicle that includes window 122 is subject to a select environmental condition, etc. It is determined at block 604 if a condition event has been detected. If a condition event has not been detected at block 604, the process continues at block 602 monitoring for a window condition event.

If it is determined at block 604 that a condition event has been detected, it is then determined if the window cover 130 is in a window covering position at block 606. In another example, a cover does not cover the window 122 during a window monitoring event. In the example of Figure 6, it is determined if the cover 130 is in the cover position at block 606, the process continues at block 610 energizing the light emitting source 406. If it is determined at block 606 that the cover 130 is not in the closed position, the cover 130 is closed at block 608 and then light emitting source 406 is energized at block 610.

The illumination strength is sensed at block 612. This is done by sensor 404 in an example. The cleaning controller 202 at block 614 compares the detected illumination strength with the base illumination strength. At block 616 it is determined if a difference between the detected illumination strength and the base illumination strength is above a set threshold. The threshold is set based on the effective operation of the optical air-data system 105. In one example, the threshold may be determined through experimentation of the optical air-data system 105 with the window 122 having varying levels of debris covering its outer surface 122a to determine when data from optical air-data system becomes suspect or compromised. In one experimentation example, the monitoring system 402 is used to determine the differences between detected illumination strengths and the base illumination strength with the various levels of debris on the window 122. By using the difference at the point where the data from the optical air-data system becomes suspect, the threshold of the difference is set.

If it was determined at block 616 the difference was not above the set threshold, the process continues at block 602 monitoring for a window condition event. If it is determined at block 616 that the difference is above the threshold, the window is cleaned at block 618. In one example, this is done by directing a flow of cleaning solution on the outside surface 122a of the window 122 and then directing a flow of air on the outside surface 122a of the window 122 to dry the window 122 while the cover 130 is in the cover position or configuration. Once, the window 122 is cleaned the process continues at block 602 monitoring for a window condition event.

### EXAMPLE EMBODIMENTS

Example 1 includes an optical air-data window cleaning system. The cleaning system includes at least one cleaning supply nozzle, at least one fluid pump, at least one drying nozzle, at least one pneumatic pump, monitoring system at least one controller. The at least one cleaning supply nozzle is configured to direct a cleaning solution on an outside surface of a window to an optical head of an optical air data system. The at least one fluid pump is in fluid communication with the at least one cleaning supply nozzle. The at least one drying nozzle is configured to direct an air flow on the outside surface of the window to the optical head of the optical air data system. The at least one pneumatic pump in pneumatic communication with the at least one drying nozzle. The monitoring system is configured to sense a condition of the window. The at least one controller configured to control operations of the at least one fluid pump and the at least one pneumatic pump based on an output of the monitoring system.

Example 2 includes the cleaning system of Example 1, wherein the monitoring system further includes a light emitting source configured to emit light through the window. The at least one sensor is configured to detect an illumination power of the emitted light through the window. The at least one controller is configured to determine the condition of the window based on the detected emitted light through the window.

Example 3 includes the cleaning system of Example 2, wherein the light emitting source is a light emitting diode.

Example 4 includes the cleaning system of any of the Examples 1-3, further including a cover and an actuator. The cover is configured to selectively cover the window to the optical head of the optical air-data system. The actuator is configured to move the cover to selectively cover and uncover the window.

Example 5 includes the cleaning system of Example 4, wherein the at least one controller is configured to control the actuator to selectively position the cover to cover the window when sensing the condition of the window.

Example 6 includes the cleaning system of Example 4, wherein the at least one controller is configured to control the actuator to selectively position the cover to cover the window when the window is being cleaned.

Example 7 includes the cleaning system of any of the Examples 1-6, wherein the at least one fluid pump is housed within a vehicle that includes the optical air data system.

Example 8 includes the cleaning system of any of the Examples 1-7, wherein the at least one pneumatic pump is housed within a vehicle that includes the optical air data system.

Example 9 includes the cleaning system of any of the Examples 1-8, further including a fluid reservoir to hold the cleaning solution, the fluid pump in fluid communication with the fluid reservoir.

Example, 10 includes the cleaning system of Example 9, wherein at least one of the fluid pump, the pneumatic pump and the fluid reservoir is located outside of a vehicle that includes the optical air data system.

Example 11 includes the cleaning system of Example 10, further including at least one of a fluid input port located on the vehicle to be selectively coupled to the fluid pump via an external fluid passage line, the fluid input port in communication with the fluid nozzle; and a pneumatic input port located on the vehicle to be selectively coupled to the pneumatic pump via an external pneumatic passage line, the pneumatic input port in communication with the pneumatic nozzle.

Example 12 includes an optical air-data window cleaning system. The cleaning system includes at least one cleaning supply nozzle, at least one fluid pump, at least one drying nozzle, at least one pneumatic pump, a monitoring system, a cover, an actuator and at least one controller. The at least one cleaning supply nozzle is configured to direct a cleaning solution on an outside surface of a window to an optical head of an optical air data system. The at least one fluid pump is in fluid communication with the at least one cleaning supply nozzle. The at least one drying nozzle is configured to direct an air flow on the outside surface of the window of the optical head of the optical air data system. The at least one pneumatic pump is in pneumatic communication with the at least one drying nozzle. The monitoring system is configured to sense the condition of the window. The monitoring system includes a light emitting diode and at least one sensor. The light emitting source is configured to emit light through the window. The at least one sensor is configured to detect an illumination power of the emitted light through the window. The at least one controller is configured to determine the condition of the window based on the detected emitted light through the window. The cover is configured to selectively cover the window to the optical head of the optical air-data system. The actuator is configured to move the cover to selectively cover and uncover the window. The at least one controller is further configured to control operations of the at least one fluid pump and the at least one pneumatic pump based on an output of the monitoring system. The at least one controller is configured to control the actuator to selectively position the cover to cover the window when sensing the condition of the window. The at least one controller is further still configured to control the actuator to selectively position the cover to cover the window when the window is being cleaned.

Example 13 includes the cleaning system of Example 12, further including a fluid reservoir to hold the cleaning solution. The fluid pump is in fluid communication with the fluid reservoir.

Example 14 includes the cleaning system of Example 13, wherein at least one of the fluid pump, the pneumatic pump and the fluid reservoir is located outside of a vehicle that includes the optical air data system.

Example 15 includes the cleaning system of Example 14, further includes at least one of a fluid input port located on the vehicle to be selectively coupled to the fluid pump via an external fluid passage line and a pneumatic input port located on the vehicle to be selectively coupled to the pneumatic pump via an external pneumatic passage line. The fluid input port is in communication with the fluid nozzle. The pneumatic input port is in communication with the pneumatic nozzle.

Example 16 includes a method of cleaning a window to an optical head of an optical air-data system. The method includes closing a cover to the window; energizing a light emitting source to generate emitted light through the window; sensing an illumination strength of the emitted light that passed through the window; determining if the illumination strength indicates if the window should be cleaned; and cleaning the window with the cover covering the window when it is determined that the illumination strength indicates the window should be cleaned.

Example 17 includes the method of Example 16, further including monitoring for a window condition event that indicates the condition of the window should be checked.

Example 18 includes the method of Example 17, wherein the window condition event is generated with one or more sensors.

Example 19 includes the method of any of the Examples 16-17, wherein determining if the illumination strength indicates the window should be cleaned further includes comparing the sensed illumination strength with a base illumination strength; and determining if a difference between the sensed illumination strength and the base illumination strength is above a set threshold.

Example 20 includes the method of Example 19, wherein the base illumination strength is determined by sensing the illumination strength when the window is clean.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. An optical air-data window cleaning system (400), the cleaning system (400) comprising:
at least one cleaning supply nozzle (206) configured to direct a cleaning solution (220) on an outside surface (122a) of a window (122) to an optical head (110) of an optical air data system (105);
at least one fluid pump (204) in fluid communication with the at least one cleaning supply nozzle (206);
at least one drying nozzle (212) configured to direct an air flow (224) on the outside surface (122a) of the window (122) to the optical head (110) of the optical air data system (105);
at least one pneumatic pump (210) in pneumatic communication with the at least one drying nozzle (212);
a monitoring system (402) configured to sense a condition of the window (122); and
at least one controller (202) configured to control operations of the at least one fluid pump (204) and the at least one pneumatic pump (210) based on an output of the monitoring system (402).

2. The cleaning system (400) of claim 1, wherein the monitoring system (402) further comprises:
a light emitting source (406) configured to emit light (415) through the window (122);
at least one sensor (404) configured to detect an illumination power of the emitted light through the window (122); and
the at least one controller (202) configured to determine the condition of the window (122) based on the detected emitted light through the window (122).

3. The cleaning system (400) of claim 2, wherein the light emitting source (406) is a light emitting diode.

4. The cleaning system (400) of claim 1, further comprising:
a cover (130) configured to selectively cover the window (122) to the optical head (1100 of the optical air-data system (105); and
an actuator (106) configured to move the cover (130) to selectively cover and uncover the window (122).

5. The cleaning system (400) of claim 4, wherein the at least one controller (102) is configured to control the actuator (106) to selectively position the cover (130) to cover the window (122) when sensing the condition of the window (122).

6. The cleaning system (400) of claim 4, wherein the at least one controller (102) is configured to control the actuator (106) to selectively position the cover (130) to cover the window (122) when the window (122) is being cleaned.

7. A method of cleaning a window (122) to an optical head (110) of an optical air-data system (105), the method comprising:
closing a cover (130) to the window (122);
energizing a light emitting source (406) to generate emitted light (415) through the window (122);
sensing an illumination strength of the emitted light that passed through the window;
determining if the illumination strength indicates if the window (122) should be cleaned; and
cleaning the window (122) with the cover (130) covering the window (122) when it is determined that the illumination strength indicates the window (122) should be cleaned.

8. The method of claim 7, further comprising:
monitoring for a window condition event that indicates the condition of the window (122) should be checked.

9. The method of claim 8, wherein the window condition event is generated with one or sensors (108).

10. The method of claim 7, the wherein determining if the illumination strength indicates the window (122) should be cleaned further comprises:
comparing the sensed illumination strength with a base illumination strength; and
determining if a difference between the sensed illumination strength and the base illumination strength is above a set threshold.
